**Europäisches Patentamt**

**European Patent Office**

**Office européen des brevets**

(11) Veröffentlichungsnummer : **0 411 307 B1**

(12) **EUROPÄISCHE PATENTSCHRIFT**

(45) Veröffentlichungstag der Patentschrift :
**23.12.92 Patentblatt 92/52**

(21) Anmeldenummer : **90111956.0**

(22) Anmeldetag : **23.06.90**

(51) Int. Cl.⁵ : **B60K 23/08**

(30) Priorität : **03.07.89 US 374723**

(43) Veröffentlichungstag der Anmeldung :
**06.02.91 Patentblatt 91/06**

(45) Bekanntmachung des Hinweises auf die
Patenterteilung :
**23.12.92 Patentblatt 92/52**

(84) Benannte Vertragsstaaten :
**AT BE CH DE DK ES FR GB IT LI NL SE**

(56) Entgegenhaltungen :
**EP-A- 0 213 654**
**EP-A- 0 289 484**
**EP-A- 0 329 045**
**GB-A- 2 208 217**
**US-A- 4 811 811**

(54) **Kupplungssteueranordnung für Kraftfahrzeuge.**

(73) Patentinhaber : **DEERE & COMPANY**
**1 John Deere Road**
**Moline, Illinois 61265 (US)**

(72) Erfinder : **Kittle, Carl Edwin**
**2312 Primrose**
**Cedar Falls, Iowa 50613 (US)**
Erfinder : **Harken, Daniel Joseph**
**157 Lobdell Road**
**Waterloo, Iowa 50701 (US)**
Erfinder : **Moon, Seaton**
**2009 Orchard Drive**
**Cedar Falls, Iowa 50613 (US)**

(74) Vertreter : **Feldmann, Bernhard et al**
**DEERE & COMPANY European Office Patent**
**Department Steubenstrasse 36-42**
**W-6800 Mannheim 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Kupplungssteueranordnung für ein Kraftfahrzeug mit wenigstens einer durch eine Antriebsmaschine und ein Getriebe antreibbaren Hauptachse, welche wenigstens zwei durch jeweils gesonderte Betriebsbremsen bremsbare Räder trägt, mit einer weiteren Achse, welche ein weiteres Radpaar trägt und zu dem Antriebsstrang über eine Kupplung zuschaltbar ist, mit einem Geschwindigkeitssensor, der bei Über- oder Unterschreiten eines vorgebbaren Grenzwertes der Fahrzeuggeschwindigkeit Steuersignale abgibt, und mit einem durch eine Bedienungsperson einstellbaren Betriebsartschalter, in dessen "AUS"-Stellung die Kupplung während bestimmter Betriebszustände ausgerückt ist, jedoch dann, wenn die Fahrzeuggeschwindigkeit oberhalb eines Grenzwertes liegt und beide Betriebsbremsen betätigt sind, eingerückt ist. Eine derartige Anordnung ist in dem Dokument EP-A-0329045 beschrieben, das am 23.8.89 veröffentlich wurde und somit zum Stand der Technik nach Artikel 54(3) gehört.

Es ist bekannt, Schlepper mit einem Steuersystem zu versehen, welches beim Bremsen automatisch den Vierradantrieb einschaltet und welches bei Fahrzeuggeschwindigkeiten größer als 9 mph (ca. 14 km/h) automatisch den Vierradantrieb ausschaltet. Dieses bekannte Steuersystem schaltet jedoch nicht den Vierradantrieb automatisch ab, wenn lediglich entweder die rechte oder die linke Bremse betätigt wird. Dies ist nachteilig, da beim Betrieb eines landwirtschaftlichen Schleppers häufig lediglich eine der beiden Bremsen (rechts oder links) betätigt wird, um bei einem Wendemanöver auf ungepflügtem Land die Lenkung zu unterstützen. Bleibt der Vierradantrieb während eines solchen durch die Bremsen unterstützten Lenkmanövers in Eingriff, so wird das Lenken mit der Folge beeinträchtigt, daß eine erhöhte Bremsleistung erforderlich ist und daß das Schieben, das Rutschen und der Verschleiß der Vorderradreifen zunimmt.

Aus der DE-A-29 46 477 ist es bekannt, eine Vorderradantriebskupplung, durch die sich Leistung an die Vorderräder übertragen läßt, so zu steuern, daß sie immer dann einrückt, wenn die Betriebsbremsen für die Hinterachse betätigt werden. Dadurch wird die an den Hinterradbremsen auftretende Bremskraft an die Vorderräder übertragen, so daß die Vorderräder auf jeden Fall zur Bremsung herangezogen werden. Dies kann jedoch zu einer Beeinträchtigung der bremsunterstützten Steuerung führen, wenn lediglich die linke oder rechte Radbremse betätigt wird. Die DE-A-29 46 477 beschreibt ferner ein elektromagnetisch betätigtes Ventil, das eine auf Druck ansprechende Vorderradantriebskupplung steuert. Das elektromagnetische Ventil wird seinerseits durch einen Schalter gesteuert, der bei Bremsbetätigung geschlossen wird. Die Anordnung gemäß der DE-A-29 46 477 erfordert ein Verteilerventil, welches hydraulisch mit dem linken und rechten Bremszylinder in Verbindung steht, sowie einen Kolben, der hydraulisch mit dem Verteilerventil und mechanisch mit einem auf Bremsbetätigung ansprechenden Schalter verbunden ist. Diese Anordnung erfordert daher teure hydraulische Komponenten, welche überdies Hydraulikflüssigkeit binden, die dann bei Notbremsungen fehlen könnte.

Die nicht vorveröffentlichte EP-A-0 329 045 beschreibt ein Steuersystem, welches das Ein- und Ausrücken einer Vorderradantriebskupplung eines Schleppers in Abhängigkeit der Raddrehzahl und eines durch eine Bedienungsperson einstellbaren Betriebsartschalters steuert. Der Betriebsartschalter hat die Schaltpositionen Automatik ("AUTO"), Kupplung ein ("EIN") und Kupplung aus ("AUS"). Ist der Betriebsartschalter in der "AUS"-Stellung, so ist mehreren in der EP-A-0 329 045 beschriebenen Ausführungsvarianten zufolge die Kupplung unabhängig von der Fahrzeuggeschwindigkeit und der Bremsbetätigung immer ausgerückt. Gemäß einer Ausführungsvariante kann jedoch selbst in der "AUS"-Stellung der Eingriff der Kupplung von der Bremsbetätigung derart abhängen, daß unabhängig davon, ob die Fahrzeuggeschwindigkeit hoch oder tief ist, bei Betätigung beider Bremsen auf jeden Fall die Kupplung einrückt und die Bremskraft auf alle vier Räder verteilt.

Die US-A-4811811 beschreibt ein verwandtes Steuersystem.

Die mit der Erfindung zu lösende Aufgabe wird darin gesehen, eine Kupplungssteueranordnung der eingangs genannten Art weiter zu verbessern.

Die Aufgabe wird erfindungsgemäß dadurch gelöst, daß in der "AUS"-Stellung des Betriebsartschalters die Kupplung, unabhängig von einer Bremsbetätigung, ausgerückt bleibt, sofern die Fahrzeuggeschwindigkeit unter dem Grenzwert bleibt.

Hierdurch wird die Betriebssicherheit während eines Bremsvorganges bei höheren Geschwindigkeiten erheblich erhöht, da hierbei auch in der "AUS"-Stellung des in der Fahrzeugkabine einstellbaren Betriebsartschalters eine automatische Übertragung der Bremskraft auf alle vier Räder erfolgt. Bei niedrigen Geschwindigkeiten erfolgt jedoch in der "AUS"-Stellung keine Allradbremsung.

Vorzugsweise ist eine Bremsschaltereinheit mit mehreren, funktionsmäßig mit den Betriebsbremsenbetätigungsorganen verbundenen Schaltern vorgesehen.

Einer besonders bevorzugten Ausgestaltung der Erfindung zufolge sind Mittel vorgesehen, die dann, wenn der Betriebsartschalter sich in der "AUS"-Stellung befindet, die Kupplung auch bei Absinken der Fahrzeuggeschwindigkeit unter den Grenzwert so lange in eingerücktem Zustand halten, wie beide Bremsen betätigt sind.

Hierbei ist vorzugsweise ein Halterelais mit einem geschwindigkeitsabhängigen Schalter und der Bremsschaltereinheit derart verbunden, daß bei einer Stellung des Betriebsartschalters in "AUS"-Stellung die Kupplung so lange eingerückt bleibt, wie beide Bremsen betätigt sind, auch wenn die Fahrzeuggeschwindigkeit unter den Grenzwert absinkt.

Dies hat den Vorteil, daß bei einem Bremsmanöver, welches bei höheren Geschwindigkeiten begonnen wird, keine automatische Umschaltung von Vierradbremsung auf Zweiradbremsung erfolgt, wenn der vorgebbare Geschwindigkeitsgrenzwert unterschritten wird. Es tritt damit keine für die Bedienungsperson überraschende Änderung des Bremsverhaltens ein. Jedoch bleibt auch bei dieser Ausgestaltung grundsätzlich in der "AUS"-Stellung die Kupplung auch bei Bremsbetätigung ausgerückt, sofern der Bremsvorgang bei niedrigeren Geschwindigkeiten eingeleitet wird.

Durch die erfindungsgemäße Lösung läßt sich eine bremsunterstützte Lenkung jederzeit vornehmen, ohne daß diese in Konkurenz zum Vierradantrieb tritt, wie es oben beschrieben wurde. Hierin ist ein besonderer Vorteil gegenüber bekannten Kupplungssteueranordnungen zu sehen, da der Vorderradantrieb auch ausgeschaltet wird, wenn lediglich die rechte oder linke Radbremse betätigt wird.

Weitere vorteilhafte Ausgestaltungen und Weiterbildungen der Erfindung gehen aus den Unteransprüchen hervor.

Anhand der Zeichnung, die zwei Ausführungsbeispiele der Erfindung zeigt, sollen die Erfindung sowie weitere Vorteile und vorteilhafte Weiterbildungen und Ausgestaltungen der Erfindung näher beschrieben und erläutert werden.

Es zeigt:

Fig. 1 das schematische Diagramm eines ersten erfindungsgemäßen Steuersystems für einen Frontantrieb und

Fig. 2 das schematische Diagramm eines weiteren erfindungsgemäßen Steuersystems für einen Frontantrieb.

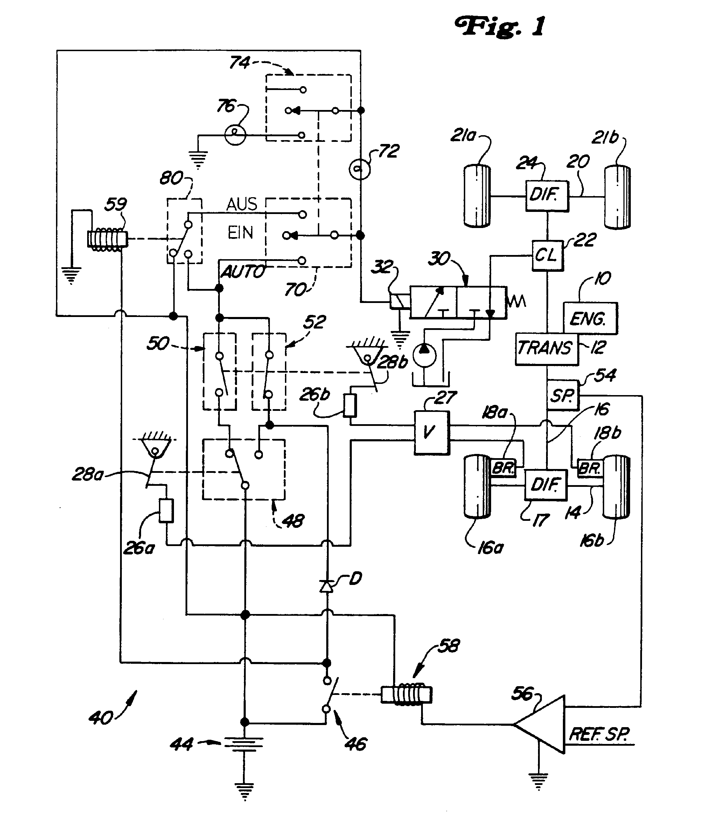

In Fig. 1 ist ein Fahrzeug, beispielsweise ein Schlepper, mit einer Antriebsmaschine 10 und einem nachgeordneten Getriebe 12 dargestellt. Das Getriebe 12 treibt über eine Welle 16 und ein Differential 17 eine Hinterachse 14 an. Die Hinterachse 14 trägt ein Paar angetriebener Hinterräder 16a, 16b, die jeweils mit einer zugehörigen Betriebsbremse 18a, 18b ausgerüstet sind. Die Antriebsmaschine 10 treibt ferner über eine druckbetätigbare Kupplung 22 und ein Differential 24 eine Vorderachse 20 und Vorderräder 21a, 21b an. Die Betriebsbremsen 18a, 18b sind durch übliche Steuerzylinder 26a, 26b, die jeweils mit dem zugehörigen Bremspedal (Betriebsbremsenbetätigungsorgan) 28a, 28b über ein Bremsausgleichsventil 27 in Verbindung stehen, hydraulisch betätigbar.

Bei der Kupplung 22 handelt es sich vorzugsweise um eine bekannte Kupplung, die durch Federkraft einrückt und durch Hydraulikdruck gelöst wird, wie sie beispielsweise in der DE-A-29 46 477 beschrieben wurde. Der Druck in der Kupplung 22 wird durch ein Ventil 30 gesteuert, welches durch eine Magnetspule 32 derart betätigbar ist, daß die Kupplung 22 ausgerückt ist, wenn die Magnetspule 32 erregt ist, und die Kupplung 22 eingerückt ist, wenn die Magnetspule 32 nicht erregt ist.

Ein Steuerkreis 40 steuert die Erregung der Magnetspule 32. Der Steuerkreis 40 enthält Schalter 48, 50 und 52, die durch Bremspedale 28a, 28b betätigbar sind, und Schalter 46 und 80, die durch Magnetspulen 58, 59 betätigbar sind. Der Schalter 48 ist ein Umschalter und weist einen ersten Anschluß, der mit einer Batterie 44 verbunden ist, einen zweiten und einen dritten Anschluß sowie ein Schaltelement auf, welches durch das linke Bremspedal 28a derart betätigbar ist, daß bei gelöstem Bremspedal 28a der erste Anschluß mit dem zweiten Anschluß verbunden ist und bei niedergetretenem Bremspedal 28a der erste Anschluß mit dem dritten Anschluß verbunden ist.

Der für gewöhnlich offene bremsbetätigbare zweipolige Schalter 50 hat einen ersten Anschluß, der mit dem zweiten Anschluß des Schalters 48 verbunden ist, einen zweiten Anschluß und ein Schaltelement, welches durch das rechte Bremspedal 28b derart betätigbar ist, daß der Schalter 50 dann offen ist, wenn das rechte Bremspedal 28b gelöst ist, und dann geschlossen ist, wenn das Bremspedal 28b niedergedrückt ist.

Der für gewöhnlich geschlossene bremsbetätigbare zweipolige Schalter 52 hat einen ersten Anschluß, der mit dem dritten Anschluß des Schalters 48 und über eine Diode D und den Schalter 46 mit der Batterie verbunden ist, einen zweiten Anschluß und ein Schaltelement, welches durch das rechte Bremspedal 28b derart betätigbar ist, daß der Schalter 52 dann geschlossen ist, wenn das rechte Bremspedal 28b gelöst ist, und dann offen ist, wenn das Bremspedal 28b niedergedrückt ist.

Ein Geschwindigkeitssensor 54 erfaßt die Fahrzeuggeschwindigkeit und liefert ein entsprechendes Signal an den Vergleichskreis 56. Ein Anschluß der Relaisspule 58 ist mit der Batterie 44 und ein zweiter Anschluß der Relaisspule 58 ist mit dem Ausgang des Vergleichskreises 56 verbunden. Der Vergleichskreis 56 kann einen gewöhnlichen Komparator und einen Verstärker enthalten, die so geschaltet sind, daß die Relaisspule 58 nur dann erregt und der Relaisschalter 46 nur dann geschlossen wird, wenn die Fahrzeuggeschwindigkeit einen festlegbaren Wert überschreitet.

Ein erster handbetätigbarer Schalter 70 enthält einen ersten Anschluß, der mit der Magnetspule 32 und einem Anschluß einer Anzeigeleuchte 72 verbunden ist, einen zweiten Anschluß, der mit den zweiten Anschlüssen der Schalter 50 und 52 verbunden ist, einen nicht verbundenen dritten Anschluß, einen vierten Anschluß und ein bewegbares Schaltelement, durch das sein erster Anschluß mit seinem zweiten, dritten oder vierten Anschluß verbindbar ist.

Ein zweiter handbetätigbarer Schalter 74 enthält einen ersten Anschluß, der mit dem anderen Anschluß der Anzeigeleuchte 72 und mit der Batterie verbunden ist, einen zweiten Anschluß, der über eine Anzeigeleuchte 76 mit Masse verbunden ist, je einen nicht verbundenen dritten und vierten Anschluß und ein Schaltelement, das mit dem Schaltelement des Schalters 70 mechanisch gekoppelt ist und durch welches sein erster Anschluß mit seinem zweiten, dritten oder vierten Anschluß verbindbar ist.

Eine zweite Relaisspule 59 ist über den Schalter 46 derart mit der Batterie 44 verbunden, daß sie bei geschlossenem Magnetschalter 46 erregt wird. Die zweite Relaisspule 59 betätigt einen zweiten Magnetschalter 80. Dieser Magnetschalter 80 ist ein Umschalter und enthält einen ersten Anschluß, der mit dem vierten Anschluß des Schalters 70 verbunden ist, einen zweiten Anschluß, der mit der Batterie 44, der Anzeigeleuchte 72 und dem ersten Anschluß des Schalters 74 verbunden ist, einen dritten Anschluß, der mit dem zweiten Anschluß des Schalters 70 und den zweiten Anschlüssen der Schalter 50 und 52 verbunden ist, und ein Schaltelement, das gewöhnlich seinen ersten und zweiten Anschluß verbindet und für den Fall einer Erregung der Relaisspule 59 seinen ersten und dritten Anschluß verbindet. Die Kathode der Diode D ist mit den Schaltern 48 und 52 verbunden, und die Anode der Diode D ist mit dem Schalter 46 und der Relaisspule 59 verbunden. Sie verhindert eine Erregung der Relaisspule 59 für den Fall, daß der Schalter 48 betätigt wird.

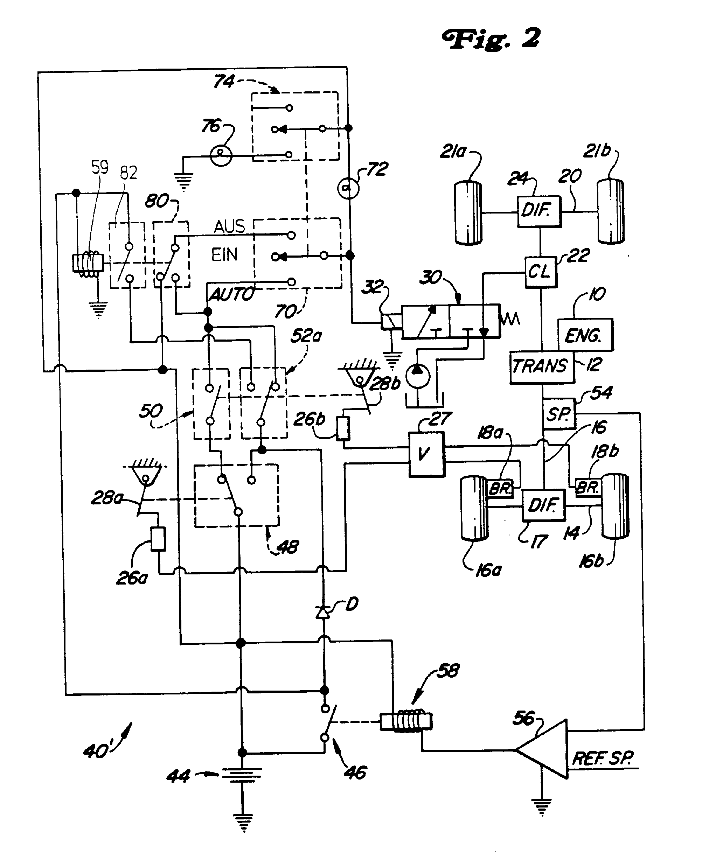

Die Fig. 2 zeigt ein ähnliches Diagramm wie Fig. 1. Daher wurden gleiche Bauteile mit den selben Bezugszeichen belegt. Der Steuerkreis 40' gemäß Fig. 2 ist dem in Fig. 1 dargestellten Steuerkreis 40 ähnlich, so daß hier lediglich die zusätzlichen, bzw. unterschiedlichen Elemente näher beschrieben werden. Der Steuerkreis 40' gemäß Fig. 2 enthält einen dritten geschwindigkeitsabhängigen Schalter 82 mit einem ersten Anschluß, der mit einem Anschluß der zweiten Relaisspule 59 und über den Schalter 46 mit der Batterie 44 verbunden ist, einem zweiten Anschluß und einem Schaltelement, welches mit dem Schaltelement des Schalters 80 mechanisch gekoppelt ist. Der Schalter 82 ist offen, wenn die Relaisspule 59 nicht erregt ist, und geschlossen, wenn die Relaisspule 59 erregt ist.

Der Schalter 52 der Fig. 1 wurde in Fig. 2 durch den ähnlichen Schalter 52a ersetzt, der ein Umschalter ist und einen dritten Anschluß enthält, welcher mit dem zweiten Anschluß des Schalters 82 verbunden ist. Das Schaltelement des Schalters 52a verbindet seinen ersten und zweiten Anschluß, wenn das Bremspedal 28b gelöst ist, und seinen ersten und dritten Anschluß, wenn das Bremspedal 28b betätigt ist.

Wirkungsweise der Schaltung gemäß Fig. 1:

Befindet sich der Schalter 70, bei dem es sich um einen Betriebsartschalter handelt, in der "AUTO"-Stellung, so bringt der Steuerkreis 40 die Kupplung 22 dann in Eingriff, wenn beide Bremspedale 28a, 28b betätigt sind. Dagegen wird die Kupplung 22 ausgerückt, wenn lediglich eines der Bremspedale 28a, 28b betätigt ist. Sind beide Bremspedale 28a, 28b unbetätigt, so tritt die Kupplung 22 in Eingriff, außer wenn die Fahrzeuggeschwindigkeit einen bestimmten Wert, beispielsweise 14 km/h, überschreitet. In letzterem Fall wird der Schalter 46 geschlossen, wodurch die Magnetspule 32 erregt und die Kupplung gelöst wird.

Befindet sich der Schalter 70 in der "AUS"-Stellung und die Fahrzeuggeschwindigkeit unter dem bestimmten Wert, beispielsweise 14 km/h, so daß die Schalter 46 und 80 die dargestellte Lage einnehmen, so wird die Magnetspule 32 über die Schalter 80 und 72 erregt und die Kupplung 22 wird unabhängig von einer Betätigung der Bremspedale 28a, 28b ausgerückt. Überschreitet jedoch die Fahrzeuggeschwindigkeit den bestimmten Wert, beispielsweise 14 km/h, so verbindet der Schalter 80 die Schalter 50 und 52 mit der Magnetspule 32, und der Schalter 46 verbindet den Schalter 52 mit der Batterie 44, so daß die Kupplung 22 ausgerückt wird, wenn beide Bremspedale 28a, 28b frei sind oder wenn nur ein Bremspedal betätigt wird. Werden hingegen beide Bremspedale 28a, 28b betätigt, so trennen die Schalter 48 bis 52 die Magnetspule 32 von der Batterie und rücken somit die Kupplung 22 ein. Hierdurch wird für einen Vierradantrieb sichergestellt, daß bei hohen Fahrzeuggeschwindigkeiten, unabhängig von der Einstellung des Schalters 70, eine zusätzliche auf alle vier Räder wirkende Bremsbefähigung gegeben ist. Dagegen wird sichergestellt, daß bei niedrigen Geschwindigkeiten die Kupplung ausgerückt wird, sofern der Schalter 70 sich in seiner "AUS"-Stellung befindet.

Wirkungsweise der Schaltung gemäß Fig. 2:

Die Wirkungsweise der Schaltung gemäß Fig. 2 ist ähnlich wie die gemäß Fig. 1, wenn man von dem Schalter 82 und der Relaisspule 59 absieht, die als Haltekreis zusammenwirken, so daß (wenn sich der Schalter 70 in "AUS"-Stellung befindet) die Kupplung 22 eingreift, sofern beide Bremspedale 28a, 28b betätigt und der Bremsvorgang eingeleitet wurde, während die Fahrzeuggeschwindigkeit über dem bestimmten Grenzwert lag. Die Kupplung 22 bleibt auch beim Abfallen der Fahrzeuggeschwindigkeit unter den bestimmten Wert so lange in Eingriff, wie beide Bremspedale 28a, 28b betätigt bleiben. Dies ist so, weil die Relaisspule 59 über die Schalter 48, 52a und 82 mit der Batterie 44 so lange verbunden bleibt, wie die beiden Bremspedale 28a, 28b betätigt sind, so daß die Erregung der Relaisspule 59 nicht davon beeinflußt wird, ob der Schalter 46 infolge eines Absinkens der Fahrzeuggeschwindigkeit unter den bestimmten Wert, beispielsweise 14 km/h, geöffnet wird.

Wird jedoch wenigstens eines der Bremspedale 28a, 28b gelöst, so wird die Magnetspule 32 mit der Batterie 44 verbunden und die Kupplung 22 rückt aus. Hierbei wird auch die Relaisspule 59 stromlos, so daß die Schalter 80 und 82 in die in Fig. 2 dargestellten Lagen zurückkehren. Eine Wiederbetätigung beider Bremspedale 28a, 28b führt jedoch so lange nicht zum Wiedereinrücken der Kupplung 22, wie die Fahrzeuggeschwindigkeit unterhalb des bestimmten Wertes bleibt.

Auch wenn die Erfindung lediglich an Hand bestimmter Ausführungsbeispiele beschrieben wurde, erschließen sich für den Fachmann im Lichte der vorstehenden Beschreibung viele verschiedenartige Alternativen, Modifikationen und Varianten, die unter die vorliegenden Patentansprüche fallen. Beispielsweise können die verschiedenen gewöhnlich geschlossenen bzw. offenen Schalter durch den jeweils entgegengesetzten Typ ersetzt werden und das magnetspulenbetätigte Kupplungssteuerventil kann durch ein Ventil ersetzt werden, bei dem bei erregter Spule die Kupplung einrückt und nicht ausrückt. Ferner kann die Steuerlogik der vorliegenden Erfindung durch einen Festkörperlogikkreis oder einen entsprechend programmierten Mikroprozessor verwirklicht werden.

**Patentansprüche**

1. Kupplungssteueranordnung für ein Kraftfahrzeug mit wenigstens einer durch eine Antriebsmaschine (10) und ein Getriebe (12) antreibbaren Hauptachse (14), welche wenigstens zwei durch jeweils gesonderte Betriebsbremsen (18a, 18b) bremsbare Räder (16a, 16b) trägt, mit einer weiteren Achse (20), welche ein weiteres Radpaar (21a, 21b) trägt und zu dem Antriebsstrang über eine Kupplung (22) zuschaltbar ist, mit einem Geschwindigkeitssensor (54), der bei Über- oder Unterschreiten eines vorgebbaren Grenzwertes der Fahrzeuggeschwindigkeit Steuersignale abgibt, und mit einem durch eine Bedienungsperson einstellbaren Betriebsartschalter (70), in dessen "AUS"-Stellung die Kupplung (22) während bestimmter Betriebszustände ausgerückt ist, jedoch dann, wenn die Fahrzeuggeschwindigkeit oberhalb eines Grenzwertes liegt und beide Betriebsbremsen (18a, 18b) betätigt sind, eingerückt ist, dadurch gekennzeichnet, daß in der "AUS"-Stellung des Betriebsartschalters (70) die Kupplung (22), unabhängig von einer Bremsbetätigung, ausgerückt bleibt, sofern die Fahrzeuggeschwindigkeit unter dem Grenzwert bleibt.

2. Kupplungssteueranordnung nach Anspruch 1, dadurch gekennzeichnet, daß eine Bremsschaltereinheit mit mehreren, funktionsmäßig mit den Betriebsbremsenbetätigungsorganen (28a, 28b) verbundenen Schaltern (48, 50, 52, 52a) vorgesehen ist.

3. Kupplungssteueranordnung nach Anspruch 2, gekennzeichnet durch eine mit dem Betriebsartschalter (70) verbundene Betätigungseinrichtung (30, 32), die in Abhängigkeit einer elektrischen Spannung die Kupplung ein- und ausrückt, eine Spannungsquelle (44), einen ersten geschwindigkeitsabhängigen Schalter (46), der zwischen der Spannungsquelle (44) und der Bremsschaltereinheit liegt und entsprechend dem Ausgangssignal des Geschwindigkeitssensors (54) geschaltet wird, und einen zweiten geschwindigkeitsabhängigen Schalter (80), der zwischen der Spannungsquelle (44), der Bremsschaltereinheit und dem Betriebsartschalter (70) liegt und entsprechend dem Ausgangssignal des Geschwindigkeitssensors (54) geschaltet wird.

4. Kupplungssteueranordnung nach Anspruch 3, dadurch gekennzeichnet, daß der Betriebsartschalter (70) einen ersten mit der Betätigungseinrichtung (30, 32) verbundenen Anschluß, einen zweiten mit der Bremsschaltereinheit verbundenen Anschluß, einen dritten und einen vierten Anschluß sowie ein bewegbares Schaltelement enthält, das in einer ersten Lage (AUTO) den ersten mit dem zweiten Anschluß verbindet, in einer zweiten Lage (EIN) den ersten mit dem dritten Anschluß verbindet und in einer dritten Lage (AUS) den ersten mit dem vierten Anschluß verbindet, und daß der zweite geschwindigkeitsabhängige Schalter (80) versehen ist mit einem ersten Anschluß, der mit dem vierten Anschluß des Betriebsartschalters (70) verbunden ist, einem zweiten mit der Spannungsquelle (44) verbundenen Anschluß, einem dritten mit der Bremsschaltereinheit verbundenen Anschluß und einem bewegbaren Schaltelement, welches aus einer ersten Lage, in der der erste mit dem zweiten Anschluß verbunden ist, in eine zweite Lage, in der der erste mit dem dritten Anschluß verbunden ist, bewegt wird, sofern die Fahrzeuggeschwindigkeit den Grenzwert überschreitet.

5. Kupplungssteueranordnung nach Anspruch 4, dadurch gekennzeichnet, daß der zweite geschwindigkeitsabhängige Schalter (80) zur Betätigung seines Schaltelementes eine Relaisspule (59) enthält und daß der erste geschwindigkeitsabhängige Schalter (46) zwischen der Spannungsquelle (44) und einem Anschluß der Relaisspule (59) derart geschaltet ist, daß beim Schließen des ersten Schalters (46) die Relaisspule (59) erregt wird und das Schaltelement des zweiten Schalters (80) in seine zweite Lage gebracht wird.

6. Kupplungssteueranordnung nach Anspruch 5, dadurch gekennzeichnet, daß eine Diode (D) vorgesehen ist, deren Kathode mit der Bremsschaltereinheit und deren Anode mit dem Anschluß der Relaisspule (59) und dem Schaltelement des ersten geschwindigkeitsabhängigen Schalters (46) derart verbunden ist, daß eine an der Bremsschaltereinheit anliegende Spannung nicht an die Relaisspule (59) geleitet wird.

7. Kupplungssteueranordnung nach einem der Ansprüche 1 bis 6, dadurch gekennzeichnet, daß Mittel vorgesehen sind, die dann, wenn der Betriebsartschalter (70) sich in der "AUS"-Stellung befindet, die Kupplung (22) auch bei Absinken der Fahrzeuggeschwindigkeit unter den Grenzwert so lange in eingerücktem Zustand halten, wie beide Bremsen betätigt sind.

8. Kupplungssteueranordnung nach Anspruch 7, dadurch gekennzeichnet, daß ein Halterelais (82) mit dem zweiten geschwindigkeitsabhängigen Schalter (80) und der Bremsschaltereinheit derart verbunden ist, daß bei einer Stellung des Betriebsartschalters in "AUS"-Stellung die Kupplung so lange eingerückt bleibt, wie beide Bremsen betätigt sind, auch wenn die Fahrzeuggeschwindigkeit unter den Grenzwert absinkt.

9. Kupplungssteueranordnung nach Anspruch 8 gekennzeichnet durch ein Halterelais (82) mit einer Relaisspule (59), die mit der Spannungsquelle über den ersten geschwindigkeitsabhängigen Schalter (46) verbunden ist, mit einem Relaisschalter, dessen erster Anschluß mit der Relaisspule sowie über den ersten geschwindigkeitsabhängigen Schalter (46) mit der Spannungsquelle (44) verbunden ist, und dessen zweiter Anschluß mit der Bremsschaltereinheit verbunden ist, und mit einem durch die Relaisspule (59) betätigbaren und mit dem Schaltelement des zweiten geschwindigkeitsabhängigen Schalters (80) verbundenen beweglichen Schaltelement.

10. Kupplungssteueranordnung nach einem der Ansprüche 3 bis 9, gekennzeichnet durch einen zweiten geschwindigkeitsabhängigen Schalter (80) mit einem ersten, mit dem Betriebsartschalter (70) verbundenen Anschluß, einem zweiten, mit der Spannungsquelle (44) verbundenen Anschluß, einem dritten mit der Bremsschaltereinheit verbundenen Anschluß, einem zwischen zwei Stellungen bewegbaren Schaltelement, durch das in einer ersten Stellung der erste und der zweite Anschluß miteinander verbunden werden und in einer zweiten Stellung der erste und der dritte Anschluß miteinander verbunden werden, und mit einer das Schaltelement betätigenden Relaisspule (59), die elektrisch mit dem ersten geschwindigkeitsabhängigen Schalter (46) verbunden ist.

11. Kupplungssteueranordnung nach Anspruch 10, dadurch gekennzeichnet, daß ein Halterelais (82) vorgesehen ist, mit einem ersten mit der Relaisspule (59) verbundenen Anschluß, einem zweiten mit der Bremsschaltereinheit verbundenen Anschluß und einem durch die Relaisspule (59) betätigbaren und mit dem Schaltelement des zweiten geschwindigkeitsabhängigen Schalters (80) verbundenen Schaltelement, wobei das Schaltelement des Halterelais' (82) den ersten mit dem zweiten Anschluß verbindet, wenn das Schaltelement des zweiten geschwindigkeitsabhängigen Schalters (80) sich in seiner zweiten Lage befindet.

12. Kupplungssteueranordnung nach Anspruch 11, gekennzeichnet durch eine Bremsschaltereinheit mit

- einem ersten Schalter (48), der einen ersten mit der Spannungsquelle (44) verbundenen Anschluß, einen zweiten und dritten Anschluß sowie ein durch das erste Betriebsbremsenbetätigungsorgan (28a) schaltbares Schaltelement enthält, das bei gelöstem Betriebsbremsenbetätigungsorgan (28a) den ersten mit dem zweiten Anschluß verbindet und bei betätigtem Betriebsbremsenbetätigungsorgan (28a) den ersten mit dem dritten Anschluß verbindet,

- einem zweiten Schalter (50), der einen ersten Anschluß, welcher mit dem ersten oder zweiten Anschluß des ersten Schalters (48) verbunden ist, einen zweiten Anschluß, welcher über den Betriebsartschalter (70) mit der Kupplungsbetätigungseinrichtung (30, 32) sowie mit dem zweiten geschwindigkeitsabhängigen Schalter (80) verbunden ist, und ein Schaltelement aufweist, welches durch das zweite Betriebsbremsenbetätigungsorgan (28b) bewegbar ist und bei Betätigung des zweiten Betriebsbremsenbetätigungsorgans (28b) die Anschlüsse miteinander verbindet und ansonsten voneinander trennt, und

- einem dritten Schalter (52), der einen ersten Anschluß, welcher mit dem anderen des ersten oder zweiten Anschlusses des ersten Schalters (48) sowie über den ersten geschwindigkeitsabhängigen Schalter (46) mit der Spannungsquelle (44) verbunden ist, einen zweiten Anschluß, der über den Betriebsartschalter (70) mit dem Kupplungsbetätigungsorgan (30, 32) sowie mit dem zweiten geschwindigkeitsabhängigen Schalter (80) verbunden ist, einem dritten Anschluß, der mit dem zweiten Anschluß des Halterelais' (82) verbunden ist, und ein Schaltelement aufweist, das durch das zweite Betriebsbremsenbetätigungsorgan (28b) bewegbar ist und bei Betätigung des zweiten Betriebsbremsenbetätigungsorgans (28b) den ersten mit dem dritten Anschluß und ansonsten den ersten mit dem zweiten Anschluß verbindet.

## Claims

1. Clutch control system for a motor vehicle with at least one main axle drivable by an engine (10) and a transmission (12), said main axle carrying at least two wheels which may be braked by respectively separate service brakes (18a, 18b), with a further axle (20) carrying a further pair of wheels (21a, 21b) and connectable to the drive train via a clutch (22), with a speed sensor (54) which, when the vehicle speed exceeds or falls short of a predeterminable threshold value, emits control signals, and with an operating mode switch (70), which may be operated by the user, and in whose "OFF" position the clutch (22) is disengaged during specific operating circumstances, but is engaged when the vehicle speed lies above a threshold value and the service brakes (18a, 18b) are actuated, characterised in that, in the "OUT" position of the operational-mode switch (70), the clutch (22) remains disengaged, independently of any brake actuation, as long as the vehicle speed remains below the threshold value.

2. Clutch control system according to Claim 1, characterised in that it is provided with a plurality of switches (48, 50, 52, 52a) functionally connected to the service brake actuating units (28a, 28b).

3. Clutch control system according to Claim 2, characterised by an actuating device (30, 32) connected to the operational-mode switch (70), and which, in dependence on an electrical voltage, engages and disengages the clutch, by a voltage source (44), a first speed-dependent switch (46), lying between the voltage source (44) and the brake switch unit, and is switched in accordance with the output signal of the speed sensor (54), and by a second speed-dependent switch (80) lying between the voltage source (44), the brake switch unit and the operational-mode switch (70), and is switched in accordance with the output signal of the speed sensor (54).

4. Clutch control system according to Claim 3, characterised in that the operational-mode switch (70) comprises a first contact connected to the actuating device (30,32), a second contact connected to the brake switch unit, a third and fourth contacts and a movable switch member, which, in a first position (AUTO) connects the first contact with the second contact, in a second position (IN) connects the first and third contacts, and in a third position (OUT) connects the first and fourth contacts, and in that the second, speed-dependent switch (80) is provided with a first contact connected to the fourth contact of the operational-mode switch (70), to a second contact connected to the current source (44), to a third contact connected to the brake switch unit, and to a movable switch member which is moved out of a first position in which the first contact is connected to the second, into a second position in which the first contact is connected to the third, as long as the vehicle speed exceeds the threshold value.

5. Clutch control system according to Claim 4, characterised in that the second speed-dependent switch (80) comprises a relay coil (59) for actuating its switch member, and in that the first speed-dependent switch (46) is incorporated in the circuit between the current source (44) and a contact of the relay coil (59) in such a way that, when the first switch (46) is closed, the relay coil (59) is energised, and the switch member of the second switch (80) is brought into its second position.

6. Clutch control system according to Claim 5, characterised in that a diode (D) is provided, whose cathode is connected to the brake switch unit, and its anode to the contact of the relay coil (59) and to the switch member of the first speed-dependent switch (46) in such a way that a voltage applied to the brake switch unit is not passed to the relay coil (59).

7. Clutch control system according to one of Claims 1 to 6, characterised in that means are provided which, when the operational-mode switch (70) is in the "OUT" position, hold the clutch (22) in the engaged condition, even when the vehicle speed drops below the threshold value, as long as both brakes are actuated.

8. Clutch control system according to Claim 7, characterised in that a locking relay (82) is connected to the second speed-dependent switch (80) and to the brake switch unit in such a way that, when the operational-mode switch is in the "OUT" position, the clutch remains engaged as long as both brakes are actuated, even if the vehicle speed drops below the threshold value.

9. Clutch control system according to Claim 8, characterised by a locking relay (82) with a relay coil (59) connected with the voltage source via the first speed-dependent switch (46), and with a relay switch whose first contact is connected to the relay coil and via the first speed-dependent switch (46) to the voltage source (44), and whose second contact is connected to the brake switch unit, and with a movable switch member, actuable by the relay coil (59) and connected to the switch member of the second speed-dependent switch (80).

10. Clutch control system according to one of Claims 3 to 9, characterised by a second speed-dependent switch (80) with a first contact connected to the operational-mode switch (70), with a second contact connected to the voltage source (44), with a third contact connected to the brake switch unit, with a switch member movable between two positions, by means of which, in a first position, the first and second contacts are connected, and in a second position the first and third contacts are connected, and with a relay coil (59), actuating the switch member, said coil (59) being electrically connected to the first speed-dependent switch (46).

11. Clutch control system according to Claim 10, characterised in that a locking relay (82) is provided, with a first contact connected to the relay coil (59), with a second contact connected to the the brake switch unit, and with a switch member actuable by the relay coil (59) and connected to the switch member of the second speed-dependent switch (80), the switch member of the locking relay (82) connecting the first and second contacts when the switch member of the second speed-dependent switch (80) is in its second position.

12. Clutch control system according to Claim 11, characterised by a brake switch unit with:
   - a first switch (48) comprising a first contact connected to the voltage source (44), a second and third contacts and a switch member switchable by the first service brake actuating unit (28a) and which, when the service brake actuating unit (28a) is released, connects the first contact to the second and, when the service brake actuating unit (28a) is actuated, connects the first contact to the third,
   - a second switch (50) having a first contact connected to the first or second contact of the first switch (48), a second contact connected via the operational-mode switch (70) to the clutch actuating device (30, 32), and to the second speed-dependent switch (80), and having a switch member which is movable by means of the second service brake actuating unit (28b) and, upon actuation of the second service brake actuating unit (28b), connects the contacts together and otherwise separates them, and
   - a third switch (52) having a first contact connected to the other of the first or second contacts of the first switch (48) and connected via the first speed-dependent switch (46) to the voltage source (44), having a second contact connected via the operational-mode switch (70) to the clutch actuating unit (30, 32) and to the second speed-dependent switch (80), with a third contact connected to the second contact of the locking relay (82), and has a switch member which is movable by means of the second service brake actuating unit (28b) and, upon actuation of the second service brake actuating unit (28b) connects the first contact with the third, and otherwise connects the first contact to the second.

## Revendications

1. Commande d'embrayage pour un véhicule à moteur avec au moins un arbre principal (14) qui peut être entraîné par un moteur (10) et une boîte de vitesses (12) et qui porte au moins deux roues (16a, 16b) qui peuvent être freinés par des freins de service respectifs distincts (18a, 18b), avec un autre arbre (20) qui porte une autre paire de roues (21a, 21b) et qui peut être enclenché dans la chaîne d'entraînement par l'intermédiaire d'un embrayage (22), avec un capteur de vitesse (54) qui délivre des signaux de commande en cas de dépassement ou de sous-dépassement d'une valeur limite consignable de la vitesse du véhicule, et avec un commutateur de mode de fonctionnement (70) qui peut être réglé par un opérateur et dans la position "AUS" (position de coupure) duquel l'embrayage (22) est débrayé pendant des états de fonctionnement donnés, mais est embrayé si la vitesse du véhicule se trouve au-dessus d'une valeur limite et si les deux freins de service (18a, 18b) sont actionnés, **caractérisée** en ce que, dans la position "AUS" (position de coupure) du commutateur de mode de fonctionnement (70), l'embrayage (22) reste débrayé, indépendamment d'un actionnement de freinage, dans la mesure où la vitesse du véhicule se trouve en dessous de la valeur limite.

2. Commande d'embrayage selon la revendication 1, **caractérisée** en ce qu'une unité de commutation de freinage est prévue, qui est dotée de plusieurs commutateurs (48, 50, 52, 52a), fonctionnellement reliés aux organes d'actionnement de freins de service (28a, 28b).

3. Commande d'embrayage selon la revendication 2, **caractérisée** par un dispositif d'actionnement (30, 32) qui est relié au commutateur de mode de fonctionnement (70) et qui embraye et débraye l'embrayage en fonction d'une tension électrique, par une source de tension (44), par un premier commutateur (46) en fonction de la vitesse, qui se trouve entre la source de tension (44) et l'unité de commutation de freinage et qui est commuté en fonction du signal de sortie du capteur de vitesse (54), et par un second commutateur (80) en fonction de la vitesse, qui se trouve entre la source de tension (44), l'unité de commutation de freinage et le commutateur de mode de fonctionnement (70) et qui est commuté en fonction du signal de sortie du capteur de vitesse ( 54 ).

4. Commande d'embrayage selon la revendication 3, **caractérisée** en ce que le commutateur de mode de fonctionnement (70) comprend une première connexion reliée au dispositif d'actionnement (30, 32), une deuxième connexion reliée à l'unité de commutation de freinage, une troisième et une quatrième connexions ainsi qu'un élément de commutation déplaçable, qui relie la première connexion à la deuxième dans une première position (AUTO), relie la première connexion à la troisième dans une deuxième position (EIN) et relie la première connexion à la quatrième dans une troisième position (AUS), et en ce que le second commutateur (80) en fonction de la vitesse est doté d'une première connexion qui est reliée à la quatrième connexion du commutateur de mode de fonctionnement (70), d'une seconde connexion reliée à la source de tension (44), d'une troisième connexion reliée à l'unité de commutation de freinage et d'un élément de commutation déplaçable qui, dans la mesure où la vitesse du véhicule dépasse la valeur limite, est déplacé d'une première position, dans laquelle la première connexion est reliée à la deuxième connexion, dans une seconde position, dans laquelle la première connexion est reliée à la troisième connexion.

5. Commande d'embrayage selon la revendication 4, **caractérisée** en ce que le second commutateur (80) en fonction de la vitesse contient une bobine de relais (59) pour l'actionnement de son élément de commutation, et en ce que le premier commutateur (46) en fonction de la vitesse est branché entre la source de tension (44) et la bobine de relais (59) de telle sorte que, lors de la fermeture du premier commutateur (46), la bobine de relais (59) est excitée et l'élément de commutation du second commutateur (80) est amené dans sa seconde position.

6. Commande d'embrayage selon la revendication 5, **caractérisée** en ce qu'une diode (D) est prévue, dont la cathode est reliée à l'unité de commutation de freinage, et l'anode à la connexion de la bobine de relais (59) et à l'élément de commutation du premier commutateur (46) en fonction de la vitesse, de telle sorte qu'une tension appliquée à l'unité de commutation de freinage n'est pas dirigée sur la bobine de relais (59).

7. Commande d'embrayage selon l'une des revendications 1 à 6, **caractérisée** en ce que des moyens sont prévus qui, lorsque le commutateur de mode de fonctionnement (70) se trouve dans la position "AUS", maintiennent l'embrayage (22) dans l'état embrayé tant que les deux freins sont actionnés, même si la vitesse du véhicule descend en dessous de la valeur limite.

8. Commande d'embrayage selon la revendication 7, **caractérisée** en ce qu'un relais de maintien (82) est relié au second commutateur (80) en fonction de la vitesse et à l'unité de commutation de freinage de telle sorte que, lorsque le commutateur de mode de fonctionnement (70) se trouve dans la position "AUS", l'embrayage reste embrayé tant que les deux freins sont actionnés, même si la vitesse du véhicule descend en dessous de la valeur limite.

9. Commande d'embrayage selon la revendication 8, **caractérisée** par un relais de maintien (82), avec une bobine de relais (59) qui est relié à la source de tension par l'intermédiaire du premier commutateur (46) en fonction de la vitesse, avec un commutateur de relais dont la première connexion est reliée à la bobine de relais ainsi qu'à la source de tension (44) par l'intermédiaire du premier commutateur (46) en fonction de la vitesse, et dont la seconde connexion est reliée à l'unité de commutation de freinage, et avec un élément de commutation mobile qui peut être actionné par la bobine de relais (59) et qui est relié à l'élément de commutation du second commutateur (80) en fonction de la vitesse.

10. Commande d'embrayage selon l'une des revendications 3 à 9, **caractérisée** par un second commutateur (80) en fonction de la vitesse avec une première connexion reliée au commutateur de mode de fonctionnement (70), une deuxième connexion reliée à la source de tension (44), une troisième connexion reliée à l'unité de commutation de freinage, un élément de commutation qui peut être déplacé entre deux positions et qui relie entre elles la première et la deuxième connexions dans une première position, et la première et la troisième connexions dans une seconde position, et avec une bobine de relais (59) qui actionne l'élément de commutation et qui est reliée électriquement au premier commutateur (46) en fonction de la vitesse.

11. Commande d'embrayage selon la revendication 10, **caractérisée** en ce qu'un relais de maintien (82) est prévu, avec une première connexion reliée à la bobine de relais (59), une seconde connexion reliée à l'unité de commutation de freinage et un élément de commutation qui peut être actionné par la bobine de relais (59) et qui est reliée à l'élément de commutation du second commutateur (80) en fonction de la vitesse, l'élément de commutation du relais de maintien (82) reliant la première connexion à la seconde si l'élément de commutation du second commutateur (80) en fonction de la vitesse se trouve dans sa seconde position.

12. Commande d'embrayage selon la revendication 11, **caractérisée** par une unité de commutation de freinage avec
   - un premier commutateur (48) qui contient une première connexion reliée à la source de tension (44), une deuxième et une troisième connexions ainsi qu'un élément de commutation qui peut être commuté par le premier organe d'actionnement de freins de service (28a) et qui relie la première connexion à la deuxième lorsque l'organe d'actionnement de freins de service (28a) est relâché, et la première connexion à la troisième lorsque l'organe d'actionnement de freins de service ( 28a) est actionné,
   - un deuxième commutateur (50) qui présente une première connexion, qui est reliée à la première ou la deuxième connexion du premier commutateur (48), une seconde connexion, qui est reliée au dispositif d'actionnement d'embrayage (30, 32) par l'intermédiaire du commutateur de mode de fonctionnement (70) ainsi qu'au second commutateur (80) en fonction de la vitesse, et un élément de commutation qui peut être déplacé par le second organe d'actionnement de freins de service (28b) et qui relie les connexions entre elles en cas d'actionnement du second organe d'actionnement de freins de service (28b) et autrement les sépare l'une de l'autre, et
   - un troisième commutateur (52), qui présente une première connexion, qui est reliée à l'autre de la première ou deuxième connexion du premier commutateur (48) ainsi qu'à la source de tension (44) par l'intermédiaire du premier commutateur (46) en fonction de la vitesse, une deuxième connexion, qui est reliée à l'organe d'actionnement d'embrayage (30, 32) par l'intermédiaire du commutateur de mode de fonctionnement (70) ainsi qu'au second commutateur (80) en fonction de la vitesse, une troisième connexion, qui est reliée à la seconde connexion du relais de maintien (82), et un élément de commutation qui peut être déplacé par le second organe d'actionnement de freins de service (28b) et qui relie la première connexion à la troisième en cas d'actionnement du second organe d'actionnement de freins de service (28b), et autrement la première connexion à la deuxième.

Fig. 1

# Fig. 2